# EUROPÄISCHE PATENTANMELDUNG

(11) **EP 4 311 085 A1**
(43) Veröffentlichungstag der Anmeldung: **24.01.2024**
(21) Anmeldenummer: 22186352.5
(22) Anmeldetag: 21.07.2022
(51) Int. Cl.: H02K 15/02, B21D 28/22

(54) **BLECHPAKET SOWIE VERFAHREN ZU DESSEN HERSTELLUNG**

(71) Anmelder: voestalpine Stahl GmbH, 4020 Linz (AT)
(72) Erfinder: Fluch, Ronald, 4020 Linz (AT)
(74) Vertreter: Jell, Friedrich

(57) **Zusammenfassung**

Es werden ein Blechpaket (3), insbesondere für einen Stator einer elektrischen Maschine, sowie ein Verfahren zu dessen Herstellung gezeigt. Das Blechpaket (3) weist mehrere übereinander angeordneten Lagen (3a, 3b, 3c, 3d) auf, wobei die Lagen jeweils aus einem einzelnen Blechteil (2) oder mehreren nebeneinander angeordneten Blechteilen (2a, 2b, 2c) ausgebildet sind, und jedes Blechteil (2, 2a, 2b, 2c) einen Vorsprung (9a, 9b) aufweist, anhand welcher Vorsprünge (9a, 9b) die Lagen (3a, 3b, 3c, 3d) ineinandergreifen, und mit einer in der Mitte liegenden Längsachse (L) des Blechpakets (3). Um hohen hydraulischen Drücken, beispielsweise aufgrund einer Flüssigkeitskühlung des Blechpakets (3), standhalten zu können, wird vorgeschlagen, dass beim einzelnen, eine Lage (3a, 3b, 3c, 3d) ausbildenden Blechteil (2) der Vorsprung (9a, 9b) die Längsachse (L) des Blechpakets (3) vollständig umlaufend ausbildet ist, oder bei mehreren nebeneinander angeordneten, eine Lage (3a, 3b, 3c, 3d) ausbildenden Blechteilen (2a, 2b, 2c) die Vorsprünge dieser Blechteile (2a, 2b, 2c) gemeinsam die Längsachse (L) des Blechpakets (3) vollständig umlaufend ausbildet sind.

## Beschreibung

Die Erfindung betrifft Blechpaket, insbesondere für einen Stator einer elektrischen Maschine, und ein Verfahren zur Herstellung dieses Blechpakets mit mehreren übereinander angeordneten Lagen, wobei die Lagen jeweils aus einem einzelnen Blechteil oder mehreren nebeneinander angeordneten Blechteilen ausgebildet sind, und jedes Blechteil einen Vorsprung aufweist, anhand welcher Vorsprünge die Lagen ineinandergreifen, und mit einer durch die Mitte des Blechpakets verlaufende Längsachse des Blechpakets.

Eine reduzierte Baugröße samt erhöhter Leistungsdichte bei Blechpaketen bedarf einer Umspülung mit Kühlflüssigkeit - was eine Spaltfreiheit zwischen den Lagen aus gestapelten Blechteilen fordert. Hierfür ist es beispielsweise bekannt, gestapelte Blechteile mit einer Schmelzklebelackschicht zwischen den Blechteilen unter Druck miteinander zu verkleben. Dennoch können aufgrund von Parameterschwankungen im Paketierverfahren zur Herstellung des Blechpakets unerwünschte Beeinträchtigungen der Eigenschaften an der Schmelzklebelackschicht oder durch andere negative Einflussfaktoren eine Spaltbildung am Blechpaket nicht sicher ausgeschlossen werden - insbesondere nicht, wenn ein hoher Flüssigkeitsdruck am Blechpaket anliegt. Derartige Blechpakete sind daher im Hochleistungsbereich mit intensiver Kühlungsanforderung oftmals nicht verwendbar.

Zudem ist es bei Blechpaketen bekannt (US4578853), an den Blechteilen hohlgeprägte Vorsprünge vorzusehen, über welche die betreffenden Lagen der Blechpakete ineinandergreifen.

Es ist daher die Aufgabe der Erfindung, ein Blechpaket der eingangs geschilderten Art derart konstruktiv zu verändern, dass dieses standfest einer Flüssigkeitskühlung selbst mit hohem hydraulischen Druck unterworfen werden kann und damit universal einsetzbar ist.

Die Erfindung löst die gestellte Aufgabe durch die Merkmale des Anspruchs 1.

Die Standfestigkeit des Blechpakets gegenüber einem Flüssigkeitsdurchtritt zwischen den Lagen kann verbessert werden, wenn beim einzelnen, eine Lage ausbildenden Blechteil der Vorsprung die Längsachse des Blechpakets vollständig umlaufend ausbildet ist. Alternativ kann die Standfestigkeit des Blechpakets gegenüber einem Flüssigkeitsdurchtritt zwischen den Lagen verbessert werden, bei mehreren nebeneinander angeordneten, eine Lage ausbildenden Blechteilen die Vorsprünge dieser Blechteile gemeinsam die Längsachse des Blechpakets vollständig umlaufend ausbildet sind.

Diese vollständig die Längsachse des Blechpakets (z. B.: Mittellängsachse), umlaufend ausbildeten Vorsprünge beider Varianten können nämlich beim Stapeln der Blechteile dafür sorgen, dass sich in diesen Bereichen Spaltfreiheit ergibt. Zudem bildet sich dadurch am Blechpaket eine Art Barriere zwischen den Lagen aus - was auch bei spaltfreien Blechpaketen dafür sorgen kann, dass diese noch höheren hydraulischen Drücken standgehalten können, was beispielsweise bei einer Außenkühlung eines Statorblechpakets im Hochleistungsbereich erforderlich ist.

Auch können derartige Vorsprünge mit vorteilhaft mit bekannten Verfahren, wie diese beim Durchsetzfügen bekannt sind, am Blechpaket erzeugt werden. Vorzugsweise wird je eine Lage des Blechpakets je ein Blechteil auf, was im Vergleich mit segmentierten Lagen - also solchen Lagen, die durch mehrere nebeneinander angeordnete und aneinanderstoßende Blechteile ausgebildet werden - stets einen besonders spaltfrei durchgehenden, vollständig umlaufenden Vorsprung einer Lage sicherstellen kann. Höchste Druckbeständigkeit kann damit am Blechpaket mit Lagen aus jeweils einem einzelnen Blechteil erreicht werden.

Bei der Verwendung von segmentierten Lagen kann eine Dichtmasse, vorteilhaft auf Harzbasis, an den Stoßflächen zwischen den nebeneinander angeordneten Blechteilen vorgesehen sein, was beispielsweise die Druckbeständigkeit weiter erhöhen kann.

Das erfindungsgemäße Blechpaket ist daher nicht nur robust für eine Flüssigkeitskühlung universell auch bei hohen Hydraulikdrücken verwendbar, sondern auch kostengünstig und reproduzierbar herstellbar.

Vorzugsweise sind die Vorsprünge im äußeren Drittel des Blechpakets angeordnet, um dadurch beispielsweise bei Außenkühlung des Blechpakets hohen hydraulischen Drücken standhalten zu können. Das erfindungsgemäße Blechpaket ist damit standfest selbst im Hochleistungsbereich mit intensiver Kühlungsanforderung verwendbar.

Vorstehend Genanntes gilt insbesondere auch dann, wenn die Vorsprünge im Bereich des Außenumfangs des Blechpakets angeordnet sind. Beispielsweise, indem die Vorsprünge höchstens bis 10 mm zum Außenumfang beabstandet sind. Damit kann unter anderem die Gefahr eines eventuellen Einflusses der ineinandergreifenden Vorsprünge auf die magnetischen Eigenschaften des Blechpakets gering bleiben.

Die Konstruktion des Blechpakets kann zudem vereinfacht werden, wenn je eine Stufe im Blechteil die Vorsprünge ausbildet, und wobei je ein äußerer Rand der Blechteile jeweils einen Stufenboden der Stufe ausbildet.

Alternativ ist vorstellbar, dass eine je eine Sicke, insbesondere Rundsicke, im Blechteil die Vorsprünge ausbildet. Dies kann auch für eine ausreichend hohe Barrierewirkung gegen den Durchtritt an Flüssigkeit sogen - dies selbst bei einem vergleichsweise hohen angelegten hydraulischen Druck.

Vorstellbar ist weiter, dass die Vorsprünge jeweils eine Vorsprunghöhe im Bereich von größer gleich 0,5-mal bis kleiner gleich 2-mal, insbesondere 1-mal, der Dicke des Blechteils aufweisen. Zudem sind derart ausgebildete Vorsprünge vergleichsweise einfach am Blechteil vorsehbar. Das Blechteil kann beispielsweise eine Dicke von 0,1 bis 1 mm insbesondere 0,2 bis 0,5 mm aufweisen.

Insbesondere kann sich die Erfindung bei einem geklebten Blechpaket auszeichnen. Dabei sind die Blechteile, welche die Lagen ausbildenden, durch eine auf den Blechteilen vorgesehene Klebstoffschicht, insbesondere thermogehärteten Schmelzklebelack, beispielsweise Backlack, stoffschlüssig miteinander verbunden.

Die Vorsprünge sorgen nämlich beim Stapeln der Blechteile dafür, dass der Klebstoff in mehrere Richtungen als nur in Stapelrichtung auf Druck belastet wird - was standfest eine Blasenbildung zwischen den Lagen vermeidet. Das geklebte Blechpaket ist daher besonders für eine Flüssigkeitskühlung geeignet und kann selbst bei vergleichsweise hohen hydraulischen Drücken hohe Standfestigkeit gewährleisten. Derartige Blechpakete können sich daher beispielsweise bei Verwendung im Hochleistungsbereich mit hohen Kühlungsanforderungen auszeichnen.

Die Erfindung hat sich außerdem die Aufgabe gestellt, ein Verfahren zu schaffen, mit dem reproduzierbar ein flüssigkeitsgekühltes Blechpaket hergestellt werden kann.

Die Erfindung löst die gestellte Aufgabe durch die Merkmale des Anspruchs 8.

Indem die Vorsprünge in das Blech oder Blechband oder in die Blechteile durch Blechumformung derart eingebracht und die Blechteile derart gestapelt werden, dass sich bei einem einzelnen Blechteil in der betreffenden Lage der Vorsprung an diesem einzelnen Blechteil um die Längsachse des Blechpakets vollständig umlaufend ausbildet, oder dass sich bei mehreren nebeneinander angeordneten Blechteilen in der betreffenden Lage die Vorsprünge an diesen Blechteilen gemeinsam einen um die Längsachse des Blechpakets vollständigen Umlauf ausbilden, kann am Blechpaket reproduzierbar eine besonders sichere Barriere gegenüber einem Flüssigkeitsdurchtritt geschaffen werden.

Zudem ist dieser Verfahrensschritt mit vergleichsweise einfachen und auch beim Durchsetzfügen bekannten Umformen auf einfache Weise beim Paketieren von Blechpaketen vorsehbar - was für das Verfahren auch zu Vorteilen in der Handhabung führt. Durch das erfindungsgemäße Verfahren sind daher ohne erheblichen Mehraufwand reproduzierbar Blechpakete zu schaffen, welche standfest einer Flüssigkeitskühlung mit vergleichsweise hohen hydraulischen Drücken standhalten können.

Vorzugsweise werden die Vorsprünge derart eingebracht und die Blechteile derart gestapelt, dass die Vorsprünge im äußeren Drittel des Blechpakets angeordnet sind, um so insbesondere eine dem Außenmantel des Blechpakets zugeordnete Barriere zu schaffen.

Beispielsweise sind die Vorsprünge im Bereich des Außenumfangs des Blechpakets angeordnet, was aufgrund von weiteren Abmessungen im Vergleich mit am Blechpaket innen liegenden Vorsprüngen den Fertigungsaufwand im Verfahren weiter vermindern kann. Sind die Vorsprünge höchstens bis 10 mm vom Außenumfang beabstandet, kann dies die Reproduzierbarkeit des Verfahrens weiter erhöhen. Dies, da derart die Gefahr einer Beeinträchtigung der magnetischen Eigenschaft des Blechpakets durch Fertigungstoleranzen in der Herstellung kurzschlussfrei ineinandergreifender Vorsprüngen weiter zu verringern ist.

Die Reproduzierbarkeit des Verfahrens kann sich weiter erhöhen, wenn die Vorsprünge als Stufe oder als Sicke eingebracht werden.

Das Verfahren ist erleichterbar, wenn das Blech oder Blechband oder ein äußerer Rand des Blechteils zur Ausbildung der Stufe tiefgezogen wird

Die Vorsprünge können weiter reproduzierbare hergestellt werden, indem das Blech oder Blechband oder das Blechteil zur Ausbildung der Sicke, insbesondere Rundsicke, hohlgeprägt wird.

Damit die Blechteile beim Stapeln sicher ineinandergreifen, kann vorteilhaft sein, wenn die Vorsprünge jeweils mit einer Vorsprunghöhe im Bereich von größer gleich 0,5-mal bis kleiner gleich 2-mal, insbesondere 1-mal, der Dicke des Blechteils in das Blech oder Blechband eingebracht werden.

Das Verfahren besonders reproduzierbar flüssigkeitsdichte Blechpakete ermöglichen, indem ein Blech oder Blechband mit einem, insbesondere thermohärtbaren, Schmelzklebelack, insbesondere Backlack, bereitgestellt wird, wobei der Schmelzkleblack aktiviert wird und damit die Lagen aus Blechteilen stoffschlüssig miteinander verbunden werden.

Vorzugsweise wird der Schmelzkleblack beim Stapeln der Blechteile aktiviert und damit die Lagen aus Blechteilen stoffschlüssig verbunden, um das Verfahren weiter zu beschleunigen.

In den Figuren ist beispielsweise der Erfindungsgegenstand anhand mehrerer Ausführungsvarianten näher dargestellt. Es zeigen
- Fig. 1: eine schematische Ansicht auf eine Vorrichtung zum Herstellen von Blechpaketen,
- Fig. 2a: eine vergrößerte Teilansicht auf ein nach dem Fig. 1 hergestellte Blechpaket,
- Fig. 2b: eine vergrößerte Teilansicht auf ein Blechpaket nach einem zweiten Ausführungsbeispiel,
- Fig. 3a: eine Draufsicht auf das Blechpaket nach Fig. 2a und
- Fig. 3b: eine Draufsicht auf ein in den Lagen segmentiertes - also bei mehreren nebeneinander angeordneten Blechteilen, die eine Lage ausbildenden - Blechpaket nach einem dritten Ausführungsbeispiel.

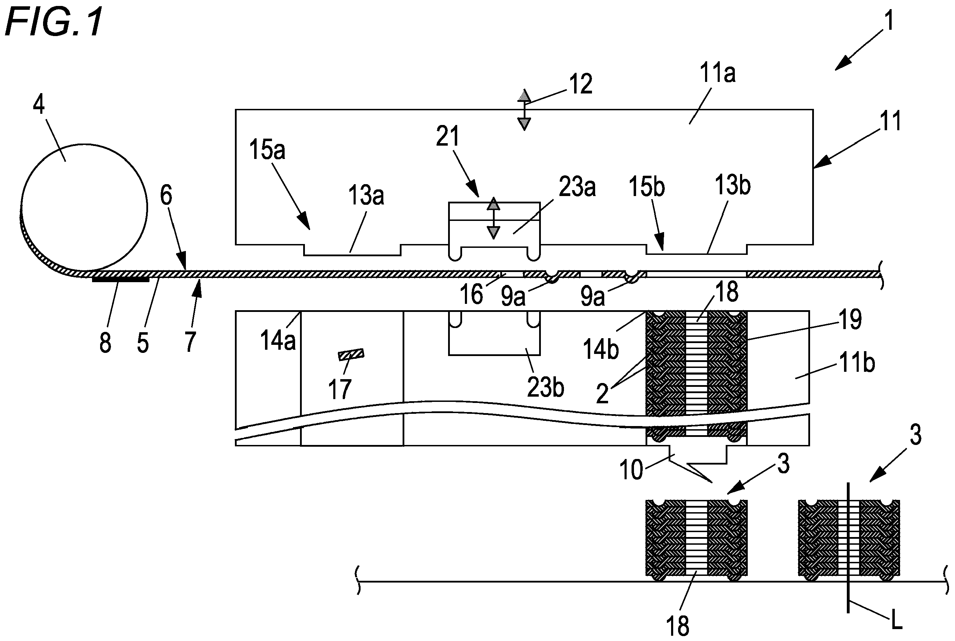

Gemäß dem Ausführungsbeispiel nach Fig. 1 wird eine Vorrichtung 1 zur Durchführung des erfindungsgemäßen Verfahrens schematisch dargestellt. Diese Vorrichtung 1 dient dem Paketieren von freigestanzten Blechteilen 2 zu Blechpaketen 3. Hierzu wird von einem Coil 4 ein Blechband 5, nämlich Elektroband (oder von einem Elektroblech im Falle eines Blechs), abgehaspelt, welches auf einer Flachseite 6 der beiden Flachseiten 6, 7 eine vollflächige Klebstoffschicht 8, nämlich heißhärtende Schmelzklebstoffschicht, wie beispielsweise Backlack, aufweist. Vorstellbar ist, dass auf beiden Flachseiten 6 und 7 eine vollflächige Klebstoffschicht 8, nämlich heißhärtende Schmelzklebstoffschicht, wie Backlack aufgebracht ist - was jedoch nicht dargestellt ist.

Das Blechband 5 weist eine Banddicke bzw. Dicke d von 0,3 mm (Millimeter) auf.

Vom klebstoffbeschichteten Blechband 5 werden mithilfe eines Stanzwerkzeugs 11 - im Ausführungsbeispiel Folgestanzwerkzeugs - mehrere Blechteile 2 vereinzelt, und zwar freigestanzt. Solch ein Freistanzen kann - im Allgemeinen erwähnt - ein Ausschneiden, Abschneiden, Ausklinken, Beschneiden, Zerteilen durch Ausdrücken etc. sein.

Wie der Fig. 1 weiter zu entnehmen, führt das Stanzwerkzeug 11 ein Schneiden mit mehreren Hüben 12 durch. Hierzu wirken die Schneiden 13a, 13b im Oberwerkzeug 11a des Stanzwerkzeugs 11 mit den jeweiligen Matrizen 14a, 14b des Unterwerkzeugs 11b des Stanzwerkzeugs 11 zusammen und bilden damit im Stanzwerkzeug 11 zwei Stanzstufen 15a, 15b aus.

Mit der ersten Schneide 13a des Oberwerkzeugs 11a wird eine Aussparung 16 in das Blechband 5 eingebracht, nämlich eingestanzt, was an dem ausgestanzten Reststück 17 in Fig. 1 zu erkennen ist.

Mit der Schneide 13b wird das Blechteil 2 vom Blechband 5 vereinzelt.

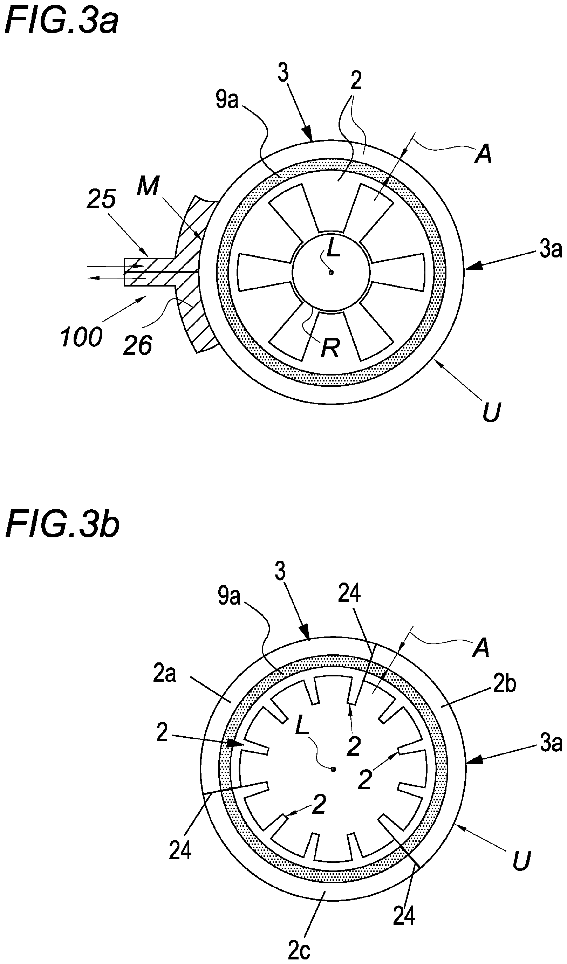

Die Aussparung 16 wird im Blechband 5 für jedes vereinzelte Blechteil 2 vorgesehen und verläuft folglich als Aufnahme 18 im Blechpaket 3 - im Ausführungsbeispiel zentrisch - durch das Blechpaket 3. In diese Aufnahme 18 ist dazu vorgesehen, einen andeutungsweise in Fig. 3a dargestellten Rotor R einer elektrischen Maschine 100 aufzunehmen, dem das Blechpaket 3 als Stator dient.

Danach werden mithilfe der Stanzstufe 15b die Blechteile 2 freigestanzt, durch Druck des Oberwerkzeugs 11a in eine Stapeleinrichtung 19 gedrängt und dort gestapelt. Hierzu weist die Stapeleinrichtung 19 eine Führung im Unterwerkzeug 11b auf. Auch ist ein teilweise in Fig. 1 dargestellter Gegenhalter 10 in der Führung vorgesehen.

Die Stapeleinrichtung 19 wird aktiv beheizt, um die Schmelzklebstoffschicht der Blechteile 2 zu aktivieren und zwischen den Blechteilen 2 eine Klebstoffverbindung bzw. stoffschlüssige Verbindung herzustellen. Auf diese Weise wird zu einem Blechpaket 3 laminiert.

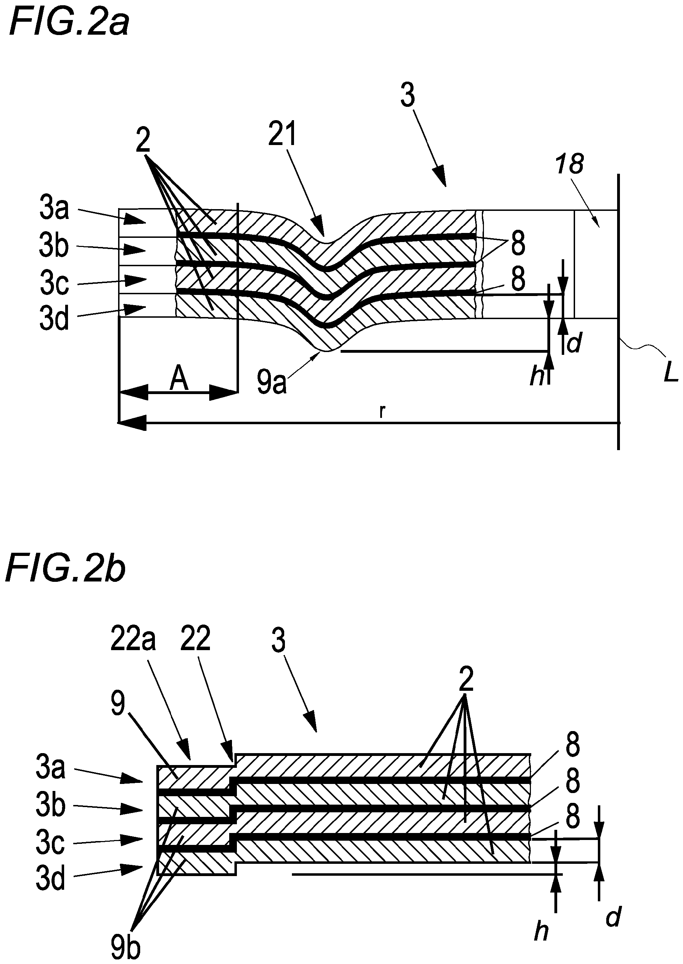

Um ein mediendichtes Blechpaket 3 zu schaffen, werden in das Blechband 3 Vorsprünge 9a, 9b durch Blechumformung eingebracht. Diese Vorsprünge 9a, 9b werden durch Hohlprägen an der Umformstufe 21 mit einem Stempel 23a und einer Matrize 23b erzeugt. Jedes Blechteil 2 eines Blechpakets 3 weist solch einen Vorsprung 9a, 9b auf. Die vereinzelten Blechteile 2 werden danach zu einem Blechpaket 3 mit mehreren Lagen 3a, 3b, 3c, 3d derart gestapelt, dass mehrere Lagen 3a, 3b, 3c, 3d des Blechpakets 3 über die Vorsprünge 9a, 9b der Blechteile 2 ineinandergreifen - wie speziell in Fig. 2a und 2b zu erkennen. Hier ist zu erkennen, wie je ein Vorsprung 9a, 9b an einem Blechteil 2 in eine, vorzugsweise dazu komplementäre, Vertiefung an einem anschließenden Blechteil 2 eingreift.

Erfindungsgemäß sind diese Vorsprünge 9a, 9b besonders ausgestaltet - und zwar sind die Vorsprünge 9a, 9b die Längsachse L des Blechpakets 3 vollständig umlaufend ausbildet - wie in den Figuren 2a, 2b, 3a und 3b zu erkennen. Siehe hierzu die Ausführungsbeispiele nach Fig. 1, 2a und 2b. Die Lagen 3a, 3b, 3c, 3d weisen je ein einzelnes Blechteil 2 auf. Die Längsachse L ist in den Ausführungsbeispielen die Mittellängsachse des Blechpakets 3, also eine durch die Mitte des Blechpakets 2 verlaufende Längsachse L. Im Ausführungsbeispiel ist diese Längsachse L beispielsweise auch eine Symmetrieachse des Blechpakets.

Sind zur Ausbildung einer Lage 3a, 3b, 3c, 3d mehrere nebeneinander angeordnete Blechteile 2a, 2b, 2c vorgesehen, wie in Fig. 3b mit drei Blechteilen 2a, 2b und 2c dargestellt, sind die Vorsprünge dieser Blechteile 2a, 2b, 2c gemeinsam die Längsachse L des Blechpakets 3 vollständig umlaufend ausbildet. Zudem ist an den Stoßflächen zwischen den Blechteilen 2a, 2b und 2c eine Dichtmasse 24 auf Harzbasis vorgesehen - was einen flüssigkeitsdichten Anschluss zwischen Blechteilen 2a, 2b und 2c sicherstellt.

Durch diesen vollständig umlaufend ausbildeten Vorsprung 9a, 9b in beiden Ausführungsvarianten sowie durch deren Ineinandergreifen der Lagen 3a, 3b, 3c, 3d wird eine Barriere gegenüber einem Flüssigkeitsdurchtritt geschaffen. Das Blechpaket 3 kann daher standfest einer Flüssigkeitskühlung - beispielsweise mit Wasser - mit vergleichsweise hohen hydraulischen Drücken ausgesetzt werden. Dies eignet das Blechpaket 3 besonders als Stator, insbesondere wenn kleine Baugröße und hohe elektrische Leistung von einer elektrischen Maschine gefordert sind.

Da die Vorsprünge 9a, 9b im Bereich des Außenumfangs U des Blechpakets 3 verlaufen, eignet sich dieses Blechpaket 3 auch besonders für eine Flüssigkeitskühlung am Mantel des Blechpaket 3. Wie in Fig. 2a dargestellt, weisen die Vorsprünge 9a der Fig. 2a einen Abstand A zum Außenumfang U des Blechpakets 3 von maximal 10 mm höchstens auf, wohingegen die Vorsprünge 9b der Fig. 2b den Außenrand der Blechteile 2 bilden.

Wie zudem den Figuren 2a und 2b zu entnehmen, sind unterschiedliche Ausbildungen der Vorsprünge 9a, 9b möglich.

Nach Fig. 2a ist der erste Vorsprung 9a als Sicke 21, nämlich wie dargestellt als Rundsicke, ausgebildet. Solch eine Rundsicke kann sich speziell (im Vergleich mit einer Kastensicke, Trapezsicke, etc.) für eine gleichmäßigere Druckbeaufschlagung des Klebstoffs zwischen den Blechteilen 2 beim Stapeln auszeichnen.

Nach Fig. 2b ist ein zweiter Vorsprung 9a dargestellt, der als Stufe 22 ausgebildet ist, deren Stufenboden 22a dem äußeren Rand der Lagen 3a, 3b, 3c, 3d entspricht.

Als ausreichend in der konstruktiven Ausgestaltung der Vorsprünge 9a, 9b hat sich herausgestellt, wenn die Vorsprünge 9a, 9b je eine Vorsprunghöhe h im Wesentlichen gleich der Dicke d des Blechteils 2 aufweisen. In diesem Fall greift ein Blechteil 2 höchstens in ein daran anschließendes Blechteil 2 ein - was nicht nur das Blechpaket 3 vereinfacht, sondern auch das Verfahren zum Paketieren erleichtert.

In Fig. 3a ist zudem eine elektrische Maschine 100 schematisch dargestellt. Die elektrische Maschine weist einen Stator mit dem erfindungsgemäßen Blechpaket 3 auf, das einen Radius r aufweist. Zudem ist diese elektrische Maschine 100 eine Kühleinrichtung 25 zugeordnet, die Kühlflüssigkeit 26 führt. Die Kühleinrichtung 25 beaufschlagt den Außenmantel M des Blechpakets 3 direkt mit der Kühlflüssigkeit 26, die damit Kontakt mit den Lagen 3a, 3b, 3c und 3d des Blechpakets kommt. Das aufgrund der umlaufenden Vorsprünge 9a, 9b dichte Blechpaket 2 hält einer Flüssigkeitskühlung selbst mit hohem hydraulischen Druck stand und erlaubt damit bei kleinen Abmessungen hohe Leistungsdichten an der elektrischen Maschine 100.

## Patentansprüche

1. Blechpaket, insbesondere für einen Stator einer elektrischen Maschine, mit mehreren übereinander angeordneten Lagen (3a, 3b, 3c, 3d), wobei die Lagen jeweils aus einem einzelnen Blechteil (2) oder mehreren nebeneinander angeordneten Blechteilen (2a, 2b, 2c) ausgebildet sind, und jedes Blechteil (2, 2a, 2b, 2c) einen Vorsprung (9a, 9b) aufweist, anhand welcher Vorsprünge (9a, 9b) die Lagen (3a, 3b, 3c, 3d) ineinandergreifen, und mit einer durch die Mitte des Blechpakets (3) verlaufende Längsachse (L) des Blechpakets (3), **dadurch gekennzeichnet, dass**
beim einzelnen, eine Lage (3a, 3b, 3c, 3d) ausbildenden Blechteil (2) der Vorsprung (9a, 9b) die Längsachse (L) des Blechpakets (3) vollständig umlaufend ausbildet ist, oder
bei mehreren nebeneinander angeordneten, eine Lage (3a, 3b, 3c, 3d) ausbildenden Blechteilen (2a, 2b, 2c) die Vorsprünge dieser Blechteile (2a, 2b, 2c) gemeinsam die Längsachse (L) des Blechpakets (3) vollständig umlaufend ausbildet sind.

2. Blechpaket nach Anspruch 1, **dadurch gekennzeichnet, dass** die Vorsprünge (9a, 9b) im äußeren Drittel des Blechpakets angeordnet sind.

3. Blechpaket nach Anspruch 2, **dadurch gekennzeichnet, dass** die Vorsprünge (9a, 9b) im Bereich des Außenumfangs (U) des Blechpakets (3) angeordnet sind, insbesondere höchstens 10 mm vom Außenumfang (U) beabstandet sind.

4. Blechpaket nach einem der Ansprüche 1 bis 3, **dadurch gekennzeichnet, dass** je eine Stufe (22) im Blechteil (2) die Vorsprünge (9b) ausbildet, und wobei der äußere Rand der Blechteile (2) jeweils einen Stufenboden (22a) der Stufe (22) ausbildet.

5. Blechpaket nach einem der Ansprüche 1 bis 3, **dadurch gekennzeichnet, dass** je eine Sicke (21), insbesondere Rundsicke, im Blechteil (2) die Vorsprünge (9a) ausbildet.

6. Blechpaket nach einem der Ansprüche 1 bis 5, **dadurch gekennzeichnet, dass** die Vorsprünge (9a, 9b) jeweils eine Vorsprunghöhe (h) im Bereich von größer gleich 0,5-mal bis kleiner gleich 2-mal, insbesondere 1-mal, der Dicke (d) des Blechteils (2) aufweisen.

7. Blechpaket nach einem der Ansprüche 1 bis 6, **dadurch gekennzeichnet, dass** die Blechteile (2), welche die Lagen (3a, 3b, 3c, 3d) ausbildenden, durch eine auf den Blechteilen (2) vorgesehene Klebstoffschicht (8), insbesondere thermogehärteten Schmelzklebelack, beispielsweise Backlack, stoffschlüssig miteinander verbunden sind.

8. Verfahren zur Herstellung eines Blechpakets (3) nach einem der Ansprüche 1 bis 7, wobei
in ein Blech oder Blechband (5) Vorsprünge (9a, 9b) durch Blechumformung eingebracht werden,
nachfolgend vom Blech oder Blechband (5) Blechteile (2) vereinzelt werden, von denen mehrere Blechteile (2) je mindestens einen Vorsprung (9a oder 9b) aufweisen, und nachfolgend
die vereinzelten Blechteile (2) zu einem Blechpaket (3) mit mehreren übereinander angeordneten Lagen (3a, 3b, 3c, 3d) derart gestapelt werden, dass mehreren Lagen (3a, 3b, 3c, 3d) des Blechpakets (3) anhand der Vorsprünge (9a, 9b) der Blechteile (2) ineinandergreifenden,
**dadurch gekennzeichnet, dass**
die Vorsprünge (9a, 9b) in das Blech oder Blechband (5) oder in die Blechteile (2) durch Blechumformung derart eingebracht und die Blechteile (2) derart gestapelt werden, dass
bei einem einzelnen Blechteil (2) einer Lage (3a, 3b, 3c, 3d) der Vorsprung (9a, 9b) die Längsachse (L) des Blechpakets (3) vollständig umlaufend ausbildet ist, oder dass
bei mehreren nebeneinander angeordneten Blechteilen (2a, 2b, 2c) einer Lage (3a, 3b, 3c, 3d) die Vorsprünge dieser Blechteile (2a, 2b, 2c) gemeinsam die Längsachse (L) des Blechpakets (3) vollständig umlaufend ausbildet sind.

9. Verfahren nach Anspruch 8, **dadurch gekennzeichnet, dass** die Vorsprünge derart (9a, 9b) eingebracht und die Blechteile (2) derart gestapelt werden, dass die Vorsprünge (9a, 9b) im äußeren Drittel des Blechpakets angeordnet sind.

10. Verfahren nach Anspruch 9, **dadurch gekennzeichnet, dass** die Vorsprünge (9a, 9b) im Bereich des Außenumfangs (U) des Blechpakets (3) angeordnet sind, insbesondere höchstens 10 mm vom Außenumfang (U) beabstandet sind.

11. Verfahren nach einem der Ansprüche 8 bis 10, **dadurch gekennzeichnet, dass** die Vorsprünge (9a, 9b) als Stufe (22) oder als Sicke (21) eingebracht werden.

12. Verfahren nach Anspruch 11, **dadurch gekennzeichnet, dass** das Blech oder Blechband (5) oder ein äußerer Rand des Blechteils (2) zur Ausbildung der Stufe (22) tiefgezogen wird.

13. Verfahren nach Anspruch 11, **dadurch gekennzeichnet, dass** das Blech oder Blechband (5) oder das Blechteil (2) zur Ausbildung der Sicke (21), insbesondere Rundsicke, hohlgeprägt wird.

14. Verfahren nach einem der Ansprüche 8 bis 13, **dadurch gekennzeichnet, dass** die Vorsprünge (9a, 9b) jeweils mit einer Vorsprunghöhe (h) im Bereich von größer gleich 0,5-mal bis kleiner gleich 2-mal, insbesondere 1-mal, der Dicke (d) des Blechteils (2) in das Blech oder Blechband (5) eingebracht werden.

15. Verfahren nach einem der Ansprüche 8 bis 14, **dadurch gekennzeichnet, dass** ein Blech oder Blechband (5) mit einem, insbesondere thermohärtbaren, Schmelzklebelack, insbesondere Backlack, bereitgestellt wird, wobei der Schmelzkleblack, insbesondere beim Stapeln der Blechteile (2), aktiviert wird und damit die Lagen (3a, 3b, 3c, 3d) aus Blechteilen (2) stoffschlüssig miteinander verbunden werden.

16. Elektrische Maschine mit einem Stator, aufweisend ein Blechpaket (3) nach einem der Ansprüche 1 bis 7, und mit einer Kühleinrichtung (26), welche eine den Außenmantel (M) des Blechpakets (3) direkt beaufschlagende Kühlflüssigkeit (27) führt.
